# EUROPEAN PATENT APPLICATION

(11) **EP 4 557 868 A1**
(43) Date of publication of application: **21.05.2025**
(21) Application number: 22950592.0
(22) Date of filing: 13.07.2022
(51) Int. Cl.: H04W 74/08

(54) **METHOD AND APPARATUS FOR DETERMINING CONSISTENT LISTEN-BEFORE-TALK FAILURE, AND STORAGE MEDIUM AND CHIP**

(71) Applicant: Beijing Xiaomi Mobile Software Co., Ltd., Beijing 100085 (CN)
(72) Inventor: YANG, Xing, Beijing 100085 (CN)
(74) Representative: Stöckeler, Ferdinand
(86) International application number: PCT/CN2022/105566
(87) International publication number: WO 2024/011466

(57) **Abstract**

The present disclosure relates to a method and apparatus for determining a consistent listen-before-talk (LBT) failure, and a storage medium and a chip. The method comprises: determining a first sending resource; and when it is determined that the number of failures in listen-before-talk (LBT), which is performed by a terminal device using the first sending resource, meets a preset condition, determining that a consistent LBT failure has occurred on the first sending resource, wherein the first sending resource is a subset of resources used by a terminal device to perform sidelink sending on an unlicensed frequency. In this way, the occurrence of a consistent LBT failure may be determined more accurately, thereby increasing the accuracy of detecting the consistent LBT failure.

## Description

### TECHNICAL FIELD

The disclosure relates to the field of communication technology, and particularly relates to a method for determining a persistent listen-before-talk (LBT) failure, an apparatus for determining a persistent LBT failure, a storage medium and a chip.

### BACKGROUND

With the development of wireless communication technology, in order to realize direct communication between terminals, 3rd Generation Partnership Project (3GPP) defines a sidelink (also called a direct link or a side link) communication mode. For example, a typical application scenario of sidelink communication is Vehicle-to-Everything (V2X). In the V2X, each vehicle may act as a terminal, and terminals may communicate with each other through the sidelink, for example, transmitting information through a direct link mode, thereby effectively reducing a communication delay.

In addition, in order to expand available frequencies, the terminal may use frequency resources in an unlicensed frequency spectrum for sidelink transmission. In order to avoid mutual interference between a plurality of terminals using the unlicensed frequency spectrum for the sidelink transmission, it is necessary to using listen-before-talk (LBT) for communication. However, in the related art, the LBT failure detection mechanism for the sidelink on the unlicensed frequency spectrum is imperfect, which may result in failure to detect consecutive LBT failures, thus affecting an efficiency of sidelink communication.

### SUMMARY

In order to overcome the above problems existing in the related art, the disclosure provides a method for determining a persistent listen-before-talk (LBT) failure, an apparatus for determining a persistent LBT failure, a storage medium and a chip.

According to a first aspect of embodiments of the disclosure, a method for determining a persistent LBT failure is provided. The method includes:
determining a first transmission resource, in which the first transmission resource includes a subset of resources used by the terminal for a sidelink transmission on an unlicensed frequency; and
in response to determining that a number of failures of the terminal performing LBT using the first transmission resource satisfies a preset condition, determining that a persistent LBT failure occurs in the first transmission resource.

According to a second aspect of embodiments of the disclosure, a method for determining a persistent LBT failure is provided. The method includes:
determining a first parameter; and
sending the first parameter to a terminal, in which the first parameter is configured to instruct the terminal to determine a statistical number threshold corresponding to a first transmission resource, and further configured to instruct the terminal to determine, according to the statistical number threshold and a number of failures of the terminal performing LBT using the first transmission resource, whether a persistent LBT failure occurs in the first transmission resource, in which the first transmission resource includes a subset of resources used by the terminal for a sidelink transmission on an unlicensed frequency.

According to a third aspect of embodiments of the disclosure, an apparatus for determining a persistent LBT failure is provided. The apparatus includes:
a first determining module, configured to determine a first transmission resource, in which the first transmission resource includes a subset of resources used by the terminal for a sidelink transmission on an unlicensed frequency; and
a second determining module, configured to, in response to determining that a number of failures of the terminal performing LBT using the first transmission resource satisfies a preset condition, determine that a persistent LBT failure occurs in the first transmission resource.

According to a fourth aspect of embodiments of the disclosure, an apparatus for determining a persistent LBT failure is provided. The apparatus includes:
a third determining module, configured to determine a first parameter; and
a second sending module, configured to send the first parameter to a terminal, in which the first parameter is configured to instruct the terminal to determine a statistical number threshold corresponding to a first transmission resource, and further configured to instruct the terminal to determine, according to the statistical number threshold and a number of failures of the terminal performing LBT using the first transmission resource, whether a persistent LBT failure occurs in the first transmission resource, in which the first transmission resource includes a subset of resources used by the terminal for a sidelink transmission on an unlicensed frequency.

According to a fifth aspect of embodiments of the disclosure, a device for determining a persistent LBT failure is provided. The device includes:
a processor;
a memory for storing instructions executable by the processor;
in which the processor is configured to perform the steps of the method for determining the persistent LBT failure provided in the first aspect of the disclosure.

According to a sixth aspect of embodiments of the disclosure, a device for determining a persistent LBT failure is provided. The device includes:
a processor;
a memory for storing instructions executable by the processor;
in which the processor is configured to perform the steps of the method for determining the persistent LBT failure provided in the second aspect of the disclosure.

According to a seventh aspect of embodiments of the disclosure, a computer-readable storage medium having computer program instructions is provided. When the computer program instructions are executed by a processor, the steps of the method for determining the persistent LBT failure provided in the first aspect of the disclosure are implemented.

According to an eighth aspect of embodiments of the disclosure, a computer-readable storage medium having computer program instructions stored thereon is provided. When the computer program instructions are executed by a processor, the steps of the method for determining the persistent LBT failure provided in the second aspect of the disclosure are implemented.

According to a ninth aspect of embodiments of the disclosure, a chip is provided. The chip includes: a processor and an interface. The processor is configured to read instructions to execute the steps of the method for determining the persistent LBT failure provided in the first aspect of the disclosure.

According to a tenth aspect of embodiments of the disclosure, a chip is provided. The chip includes: a processor and an interface. The processor is configured to read instructions to execute the steps of the method for determining the persistent LBT failure provided in the second aspect of the disclosure.

The technical solution provided by the embodiments of the disclosure may include the following beneficial effects. A first transmission resource is determined. In response to determining that a number of failures of the terminal performing LBT using the first transmission resource satisfies a preset condition, it is determined that a persistent LBT failure occurs in the first transmission resource. The first transmission resource represents resources used by the terminal for a sidelink transmission on an unlicensed frequency. In this way, the occurrence of the persistent LBT failure may be accurately determined, thus improving an accuracy of detecting the persistent LBT failure.

It is understandable that the foregoing general description and the following detailed descriptions are exemplary and explanatory only and do not limit the disclosure.

### BRIEF DESCRIPTION OF THE DRAWINGS

The accompanying drawings, which are incorporated in and constitute a part of this specification, illustrate embodiments persistent with the disclosure and, together with the specification, serve to explain principles of the embodiments of the disclosure.
FIG. 1 illustrated a schematic diagram of a communication system according to an exemplary embodiment.
FIG. 2 illustrated a flowchart of a method for determining a persistent listen-before-talk (LBT) failure according to an exemplary embodiment.
FIG. 3 illustrated a flowchart of a method for determining a persistent LBT failure according to an exemplary embodiment.
FIG. 4 illustrated a flowchart of a method for determining a persistent LBT failure according to an exemplary embodiment.
FIG. 5 illustrated a flowchart of a method for determining a persistent LBT failure according to an exemplary embodiment.
FIG. 6 illustrated a flowchart of a method for determining a persistent LBT failure according to an exemplary embodiment.
FIG. 7 illustrated a flowchart of a method for determining a persistent LBT failure according to an exemplary embodiment.
FIG. 8 illustrated a flowchart of a method for determining a persistent LBT failure according to an exemplary embodiment.
FIG. 9 illustrated a flowchart of a method for determining a persistent LBT failure according to an exemplary embodiment.
FIG. 10 illustrated a flowchart of a method for determining a persistent LBT failure according to an exemplary embodiment.
FIG. 11 illustrated a flowchart of a method for determining a persistent LBT failure according to an exemplary embodiment.
FIG. 12 illustrated a flowchart of a method for determining a persistent LBT failure according to an exemplary embodiment.
FIG. 13 illustrated a flowchart of a method for determining a persistent LBT failure according to an exemplary embodiment.
FIG. 14 illustrated a block diagram of an apparatus for determining a persistent LBT failure according to an exemplary embodiment.
FIG. 15 illustrated a block diagram of an apparatus for determining a persistent LBT failure according to an exemplary embodiment.
FIG. 16 illustrated a block diagram of an apparatus for determining a persistent LBT failure according to an exemplary embodiment.
FIG. 17 illustrated a block diagram of an apparatus for determining a persistent LBT failure according to an exemplary embodiment.
FIG. 18 illustrated a block diagram of an apparatus for determining a persistent LBT failure according to an exemplary embodiment.

### DETAILED DESCRIPTION

Exemplary embodiments will be described in detail, examples of which are illustrated in the accompanying drawings. The following description refers to the accompanying drawings in which the same number in different drawings represents the same or similar element unless otherwise represented. The implementations set forth in the following description of the embodiments do not represent all implementations persistent with the disclosure. Instead, those implementations are merely examples of apparatuses and methods persistent with some aspects related to the disclosure as recited in the attached claims.

It should be noted that all signals, information or data in this disclosure are acquired under a premise of complying with the corresponding data protection laws and policies of the located country and with an authorization given by the owner of the corresponding apparatus.

In the description of this disclosure, terms such as "first" and "second" are used to distinguish similar objects and shall not be considered as indicating a specific order or precedence. In addition, in the description referring to the accompanying drawings, the same reference numeral in different drawings represents the same element in the absence of a contrary explanation.

In the description of the disclosure, unless otherwise specified, "a plurality of" means two or more, and other quantifiers are similar thereto. The expressions such as "at least one of the following items", "one or more of the items" or similar expressions refer to any combination of these items, including any combination consisting of a single number of items or any combination consisting of a plural number of items. For example, one or more of a, b, or c may represent the case of a, b, c, a-b, a-c, b-c, or a-b-c, where the number of a, b or c may be either singular or plural. The term "and/or" describes a relation between related objects, which indicates three kinds of relations. For example, A and/or B indicates A exists alone, both A and B exist, and B exists alone, where the number of A or B may be singular or plural.

Although operations are described in a particular order in the accompanying drawings in the embodiments of the disclosure, it should not be understood that these operations need to be performed in the particular order shown or in a serial order, or that all the shown operations must be performed to obtain a desired result. In certain circumstances, multitasking and parallel processing may be advantageous.

Implementation environments of the embodiments of the disclosure is first introduced below.

The technical scheme of the embodiments of the disclosure may be applied to various communication systems. The communication system may include one or more of a 4th Generation (4G) communication system, a 5th Generation (5G) communication system, and other future wireless communication systems, such as a 6th Generation (6G) system. The communication system may also include a public land mobile network (PLMN) network, a device-to-device (D2D) communication system, a machine-to-machine (M2M) communication system, an internet of things (IoT) communication system, a vehicle-to-everything (V2X) communication system or other communication systems.

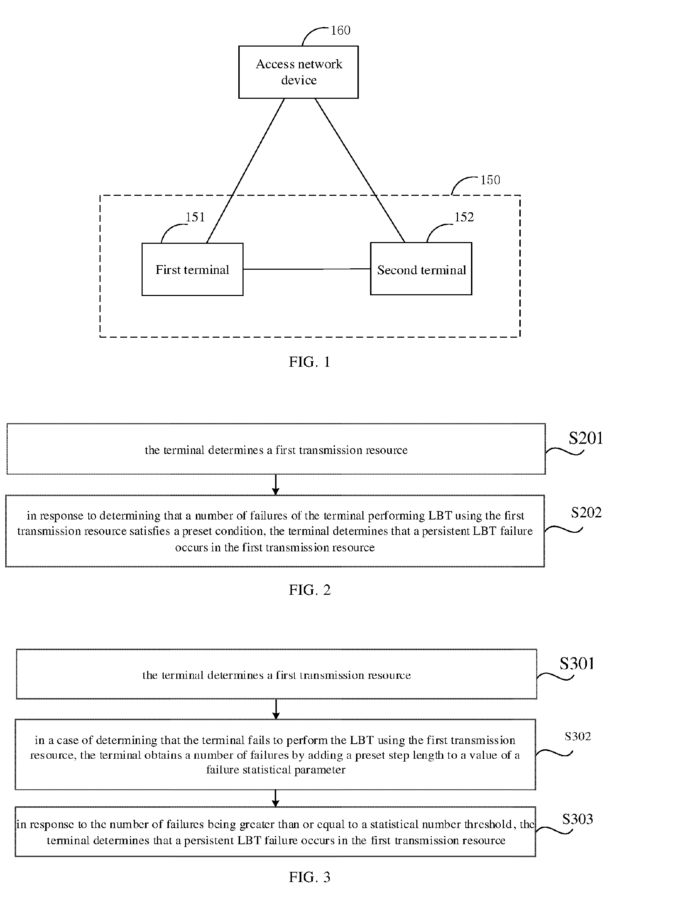

FIG. 1 illustrated a schematic diagram of a communication system according to an exemplary embodiment. As shown in FIG. 1, the communication system may include a terminal 150 and an access network device 160. The communication system may be configured to support 4G network access technology, such as long term evolution (LTE) access technology, or 5G network access technology, such as new radio access technology (New RAT), or other future wireless communication technologies. It should be noted that there may be one or more access network devices or one or more terminals included in this communication system, and the numbers of the access network device and the terminal of the communication system shown in FIG. 1 are only examples of adaptability, which is not limited by this disclosure.

The access network device in FIG. 1 may be configured to support a terminal access. For example, the access network device may be an evolved Node B (which is also referred to as eNodeB or eNB) in the LTE. The access network device may also be a next Generation Node B (which is also referred to as gNodeB or gNB)) in the 5G network. The access network device may also be a NG radio access network (NG-RAN) device in the 5G network. The access network device may also be a base station, a broadband network gateway (BNG), a convergence switch or a non-3GPP access device in a future evolved public land mobile network (PLMN). Optionally, the access network device in the embodiments of the disclosure may include various forms of base stations, such as macro base stations, micro base stations (also called small base stations), relay stations, access points, 5G base stations or future base stations, satellites, transmitting and receiving points (TRPs), transmitting points (TPs), mobile switching centers, devices that undertake functions of base station of the D2D, the M2M, the IoT, the V2X or other communication, which is not specifically limited in the embodiments of the disclosure. For convenience of description, in all the embodiments of this disclosure, any apparatus providing wireless communication functions for the terminals is referred to as the access network device or the base station.

The terminal in FIG. 1 may be an electronic device that provides voice or data connectivity. For example, the terminal may also be called a user equipment (UE), a subscriber unit, a mobile station, a station, a terminal, etc. For example, the terminal may include a smart phone, a smart wearable device, a smart speaker, a smart tablet, a wireless modem, a wireless local loop (WLL) station, a personal digital assistant (PDA), a customer premise equipment (CPE), and the like. With the development of wireless communication technologies, devices that may access the communication system, communicate with the access network device of the communication system, or communicate with other objects through the communication system, and devices that enable direct communication between two or more devices may be the terminal in the embodiments of the disclosure, such as terminals and cars in smart transportation, household devices in smart home, power meter reading devices in a smart grid, voltage monitoring devices, environment monitoring devices, video monitoring devices in a smart security network, cash registers, etc. In the embodiments of the disclosure, the terminal may communicate with the access network device, and the terminal may also communicate with other terminals. The terminal may be static fixed or mobile, which is not limited by this disclosure.

In some embodiments, the terminal in FIG. 1 may include a first terminal 151 and a second terminal 152, and the first terminal 151 and the second terminal 152 may communicate with each other through a sidelink. Sidelink communication between the first terminal 151 and the second terminal 152 may be realized in one or more of the following modes of unicast, multicast or broadcast. It should be noted that in FIG. 1, there may be one or more first terminals, and there may also be one or more second terminals, which is not limited by this disclosure.

The first terminal may communicate with the access network device through a non-sidelink, which may include an uplink and/or a downlink between the first terminal and the access network device. For example, the non-sidelink may include one or more of a physical random access channel (PRACH), a physical uplink control channel (PUCCH), a physical uplink shared channel (PUSCH), a physical downlink shared channel (PDSCH), a physical downlink control channel (PDCCH) and other links.

FIG. 2 illustrated a flowchart of a method for determining a persistent LBT failure according to an exemplary embodiment. The method may be applied to the terminal in the above communication system. As illustrated in FIG. 2, the method may include the following steps.

At step S201, the terminal determines a first transmission resource.

The first transmission resource may include a subset of resources used by the terminal for a sidelink transmission on an unlicensed frequency.

It should be noted that frequency resources used by the sidelink may include one or more of licensed frequencies and unlicensed frequencies. For example, the frequency resources are licensed frequencies, which is configured to indicate frequency spectrum resources licensed by the International Telecommunication Union (ITU) or specific countries or regions that may be used by the first terminal for a sidelink transmission. The frequency resources are unlicensed frequencies, which is configured to indicate the first terminal may use unlicensed frequency spectrum resources for the sidelink transmission (Sidelink Unlicensed, Sidelink-U). The unlicensed frequency spectrum resources may also be called common frequency spectrum resources. In order to prevent a plurality of terminals from interfering with each other during the sidelink transmission using the unlicensed frequency spectrum, the terminal need to use the LBT mode for communication during the sidelink transmission using the unlicensed frequency.

In some embodiments, the first transmission resource may also be a resource in a full set of the resources used by the terminal for the sidelink on the unlicensed frequency.

In some embodiments, the first transmission resource may include one or more of a sidelink transmission resource pool and a sidelink frequency resource.

The above mode for determining the first transmission resource, which is also a resource allocation mode in the sidelink communication, may include one or more of the following two modes.

Mode 1 is to obtain the sidelink frequency resource by a network device dynamically scheduling the sidelink frequency resources, in which the frequency resource is acted as the first transmission resource.

For example, the network device (e.g., the access network device) may dynamically allocate transmission resources on the sidelink to the terminal according to cached data report sent by the terminal. In the mode 1, the resources may be uniformly allocated by the network device.

Mode 2 is to obtain the sidelink transmission resource pool by the terminal independently selecting the sidelink transmission resource pool, in which the sidelink transmission resource pool is acted as the first transmission resource.

For example, the terminal may independently select transmission resources in a target resource pool. The target resource pool may include a resource pool broadcast by the network device (e.g., the access network device). The target resource pool may also include a resource pool preconfigured by the terminal itself.

The way of independent selection may be random selection or polling selection according to a preset order. In the mode 2, different terminals have a certain probability of choosing the same resource pool, resulting in a resource conflict.

At step S202, in response to determining that a number of failures of the terminal performing LBT using the first transmission resource satisfies a preset condition, the terminal determines that a persistent LBT failure occurs in the first transmission resource.

By adopting the above method, a first transmission resource is determined. In response to determining that a number of failures of the terminal performing LBT using the first transmission resource satisfies a preset condition, it is determined that a persistent LBT failure occurs in the first transmission resource. The first transmission resource includes a subset of resources used by the terminal for a sidelink transmission on an unlicensed frequency. In this way, the occurrence of persistent LBT failure may be accurately determined, thus improving a detection accuracy of the persistent LBT failure.

In some embodiments, the preset condition may include: a condition where the number of failures is greater than or equal to a statistical number threshold corresponding to the first transmission resource, in which the number of failures is a numerical value obtained, in a case where the terminal fails to perform the LBT using the first transmission resource, by adding a preset step length to a value of a failure statistical parameter corresponding to the first transmission resource.

In this way, the terminal may determine that the persistent LBT failure occurs in the first transmission resource.

FIG. 3 illustrated a flowchart of a method for determining a persistent LBT failure according to an exemplary embodiment. As illustrated in FIG. 3, the method may include the following steps.

At step S301, the terminal determines a first transmission resource.

At step S302, in a case of determining that the terminal fails to perform the LBT using the first transmission resource, the terminal obtains a number of failures by adding a preset step length to a value of a failure statistical parameter.

The preset step size may be any preset value, for example, 1, 0.1 or 10, which is not limited by this disclosure.

In some embodiments, there may be one or more first transmission resources, and different first transmission resources may correspond to different failure statistical parameters. For example, each of the first transmission resources may correspond to one failure statistical parameter, that is, each first transmission resource independently maintains an independent count value. The failure statistical parameter may be a failure statistical parameter corresponding to the first transmission resource.

In this way, the persistent LBT failure of each first transmission resource may be accurately detected.

In other embodiments, the failure statistical parameter may be a parameter shared by a plurality of first transmission resources of the terminal. For example, if the first transmission resource includes a sidelink transmission resource pool, a plurality of sidelink transmission resource pools of the terminal may share the same failure statistical parameter (e.g., a first failure statistical parameter). For another example, if the first transmission resource includes a sidelink frequency resource, a plurality of sidelink frequency resources of the terminal may share the same failure statistical parameter (e.g., a second failure statistical parameter). For another example, if the first transmission resource includes the sidelink transmission resource pool and the sidelink frequency resource, the sidelink transmission resource pool and the sidelink frequency resource may also share the same failure statistical parameter (for example, a third failure statistical parameter).

At step S303, in response to the number of failures being greater than or equal to a statistical number threshold, the terminal determines that a persistent LBT failure occurs in the first transmission resource.

In some embodiments, different first transmission resources may correspond to different statistical number thresholds. For example, each first transmission resource may correspond to one statistical number threshold. The statistical number threshold may be the statistical number threshold corresponding to the first transmission resource.

In other embodiments, different first transmission resources may use the same statistical number threshold.

In some embodiments of the disclosure, each first transmission resource may correspond to a separate failure statistical parameter and a separate statistical number threshold.

In this way, the persistent LBT failures of each first transmission resource may be detected more accurately.

In some embodiments of the disclosure, the above statistical number threshold may be a threshold determined by the terminal according to a received first parameter.

For example, in response to receiving a first parameter sent by an access network device or another terminal, the terminal determines the statistical number threshold corresponding to the first transmission resource.

In some embodiments, the terminal may receive the first parameter sent by the other terminal through one or more of a sidelink radio resource control (RRC) message, a sidelink medium access control-control element (MAC CE) and sidelink control information (SCI). The terminal may also send the first parameter to the other terminal through one or more of the sidelink RRC message, the sidelink MAC CE and the SCI.

In other embodiments, the terminal may receive the first parameter sent by the access network device through one or more of the RRC message, the MAC CE and downlink control information (DCI). The RRC message may include a system message and/or an RRC reconfiguration message.

In yet other embodiments, the terminal may determine the statistical number threshold corresponding to the first transmission resource according to a first preset parameter set in advance.

In further other embodiments, in response to receiving the first parameter from the access network device or the other terminal, the terminal may determines the statistical number threshold corresponding to the first transmission resource according to the first parameter. In a case where the terminal does not receive the first parameter sent by the access network device or the other terminal, or the received first parameter does not meet a preset parameter condition, the terminal may determine the statistical number threshold corresponding to the first transmission resource according to the first preset parameter.

In this way, the terminal may determine the statistical number threshold through one or more of the above-mentioned ways.

In some embodiments of the disclosure, when the terminal sending the sidelink using the unlicensed frequency, the terminal needs to perform the LBT. The terminal is able to use resources (such as the first transmission resource) unlicensed frequency for a sidelink transmission after the success of the LBT. In some embodiments, if the LBT fails, a physical layer of the terminal may notify a Medium Access Control (MAC) layer through a LBT failure indication. After the MAC layer receiving the LBT failure indication, the value of the failure statistical parameter may be added by the preset step length to obtain the number of failures. For example, the number of failures may be calculated by adding 1 to the value of the failure statistical parameter.

Further, after the MAC layer receiving the LBT failure indication sent by the physical layer, a LBT failure detection timer may be started or restarted. In a case where the LBT failure detection timer times out, the value of the failure statistical parameter may be reset. For example, the value of the failure statistical parameter may be set to a preset initial number, in which the preset initial number may be any preset value, such as 0.

In some embodiments of the disclosure, if the terminal does not fail to perform the LBT using the first transmission resource again within a first target duration after the terminal fails to perform the LBT using the first transmission resource, the value of the failure statistical parameter is set to a preset initial number.

The preset initial number may be any preset value, such as 0.

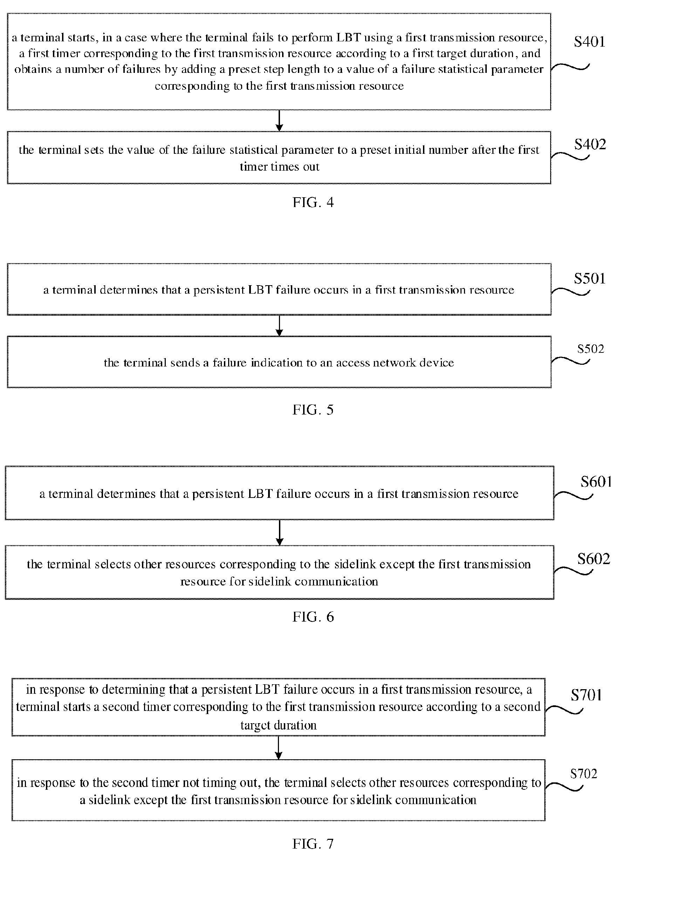

FIG. 4 illustrated a flowchart of a method for determining a persistent LBT failure according to an exemplary embodiment. As illustrated in FIG. 4, the method may include the following steps.

At step S401, a terminal starts, in a case where the terminal fails to perform LBT using a first transmission resource, a first timer corresponding to the first transmission resource according to a first target duration, and obtains a number of failures by adding a preset step length to a value of a failure statistical parameter corresponding to the first transmission resource.

The first timer may be the above LBT failure detection timer.

At step S402, the terminal sets the value of the failure statistical parameter to a preset initial number after the first timer times out.

It should be noted that the terminal needs to start or restart the first timer every time the terminal fails to perform the LBT using the first transmission resource. For example, a duration of the first timer may be set to the first target duration.

For example, before starting the first timer and the first timer does not time out, if the terminal fails to perform the LBT using the first transmission resource again, the first timer needs to be restarted, that is, the duration of the first timer is reset to the first target duration.

In some embodiments, there may be a plurality of first transmission resources, and different first transmission resources may correspond to different first timers. For example, each first transmission resource may correspond to one first timer, that is, each first transmission resource independently maintains an independent first timer.

In other embodiments, different first transmission resources may correspond to different first target durations.

In this way, the persistent LBT failure may be determined more accurately by the first timer.

In some embodiments of the disclosure, the first target duration may be a threshold determined by the terminal according to a received second parameter.

For example, the terminal may determine the first target duration corresponding to the first transmission resource in response to receiving the second parameter sent by an access network device or another terminal.

In some embodiments, the terminal may receive the second parameter sent by the other terminal through one or more of a sidelink RRC message, a sidelink MAC CE and SCI. The terminal may also send the second parameter to the other terminal through one or more of a sidelink RRC message, a sidelink MAC CE and SCI.

In other embodiments, the terminal may receive the second parameter sent by the access network device through one or more of an RRC message, a MAC CE and DCI.

In yet other embodiments, the terminal may determine the first target duration corresponding to the first transmission resource according to a second preset parameter set in advance.

In some further embodiments, in response to receiving the second parameter from the access network device or the other terminal, the terminal may determine the first target duration corresponding to the first transmission resource according to the second parameter. In a case where the terminal does not receive the second parameter sent by the access network device or the other terminal, or the received second parameter does not meet a preset parameter condition, the terminal may determine the first target duration corresponding to the first transmission resource according to the second preset parameter.

The terminal may determine the first target duration by one or more of the above-mentioned ways.

FIG. 5 illustrated a flowchart of a method for determining a persistent LBT failure according to an exemplary embodiment. As illustrated in FIG. 5, the method may include the following steps.

At step S501, a terminal determines that a persistent LBT failure occurs in a first transmission resource.

At step S502, the terminal sends a failure indication to an access network device.

The failure indication is configured to indicate that the terminal triggers the persistent LBT failure.

In some embodiments, the failure indication may include a resource identification corresponding to the first transmission resource.

It should be noted that the first transmission resource may include a subset or a full set of resources used by the terminal for a sidelink transmission on an unlicensed frequency.

In this way, in response to receiving the failure indication, the access network device may allocate a second transmission resource of the sidelink to the terminal according to the failure indication, and the second transmission resource may be different from the first transmission resource, thereby avoiding a sidelink persistent transmission failure of the terminal.

In some embodiments, the terminal may send the failure indication to the access network device through one or more of an uplink control signaling and an uplink data message. For example, the terminal may send the failure indication to the access network device through an RRC message.

In some embodiments of the disclosure, in response to the terminal determining that the persistent LBT failure occurs in the first transmission resource, the terminal may select other resources corresponding to the sidelink except the first transmission resource for sidelink communication.

FIG. 6 illustrated a flowchart of a method for determining a persistent LBT failure according to an exemplary embodiment. As illustrated in FIG. 6, the method may include the following steps.

At step S601, a terminal determines that a persistent LBT failure occurs in a first transmission resource.

At step S602, the terminal selects other resources corresponding to the sidelink except the first transmission resource for sidelink communication.

For example, when the terminal selects the resource corresponding to the sidelink, the terminal may select resources other than the first transmission resource.

In this way, a persistent transmission failure of the sidelink may be avoided, thereby improving a communication quality of the sidelink.

In other embodiments of the disclosure, the terminal may select other resources corresponding to the sidelink except the first transmission resource for sidelink communication within a second target duration after determining that the persistent LBT failure occurs in the first transmission resource.

FIG. 7 illustrated a flowchart of a method for determining a persistent LBT failure according to an exemplary embodiment. As illustrated in FIG. 7, the method may include the following steps.

At step S701, in response to determining that a persistent LBT failure occurs in a first transmission resource, a terminal starts a second timer corresponding to the first transmission resource according to a second target duration.

At step S702, in response to the second timer not timing out, the terminal selects other resources corresponding to a sidelink except the first transmission resource for sidelink communication.

In some embodiments, in response to the second timer not timing out, the terminal may retry selecting the first transmission resource for sidelink communication.

In this way, it may avoid a persistent transmission failure of the sidelink, and prevent the first transmission resource that occurred the persistent LBT failure from being unused for a long time through the second target duration, which not only improves the communication quality of the sidelink, but also improves a resource utilization of the sidelink.

In some embodiments of the disclosure, the above second target duration may be a duration determined by the terminal according to a received third parameter.

For example, in response to receiving the third parameter sent by an access network device or another terminal, the terminal may determine the second target duration.

In some embodiments, there may be a plurality of first transmission resources, and different first transmission resources may correspond to different second timers. For example, each first transmission resource may correspond to one second timer, that is, each first transmission resource independently maintains an independent second timer.

In other embodiments, different first transmission resources may also correspond to different second target durations.

In this way, through the second timer corresponding to each first transmission resource, the resources that occurred the persistent LBT failure may be eliminated more accurately when selecting the resources of the sidelink.

In some embodiments of the disclosure, the second target duration may be a threshold determined by the terminal according to the received third parameter.

For example, the terminal may determine, in response to receiving the third parameter sent by the access network device or the other terminal, the second target duration corresponding to the first transmission resource.

In some embodiments, the terminal may receive the third parameter sent by the other terminal through one or more of a sidelink RRC message, a sidelink MAC CE and SCI. The terminal may also send the third parameter to another terminal through one or more of a sidelink RRC message, a sidelink MAC CE and SCI.

In other embodiments, the terminal may receive the third parameter sent by the access network device through one or more of an RRC message, a MAC CE and DCI. The RRC message may include one or more of a system message and an RRC reconfiguration message.

In other embodiments, the terminal may determine the second target duration corresponding to the first transmission resource according to a third preset parameter preset in advance.

In some embodiments, in response to receiving the third parameter from the access network device or the other terminal, the terminal may determine the second target duration corresponding to the first transmission resource according to the third parameter. In a case where the terminal does not receive the third parameter sent by the access network device or the other terminal, or the received third parameter does not meet a preset parameter condition, the terminal may determine the second target duration corresponding to the first transmission resource according to the third preset parameter.

In this way, the terminal may determine the second target duration by one or more of the above-mentioned ways.

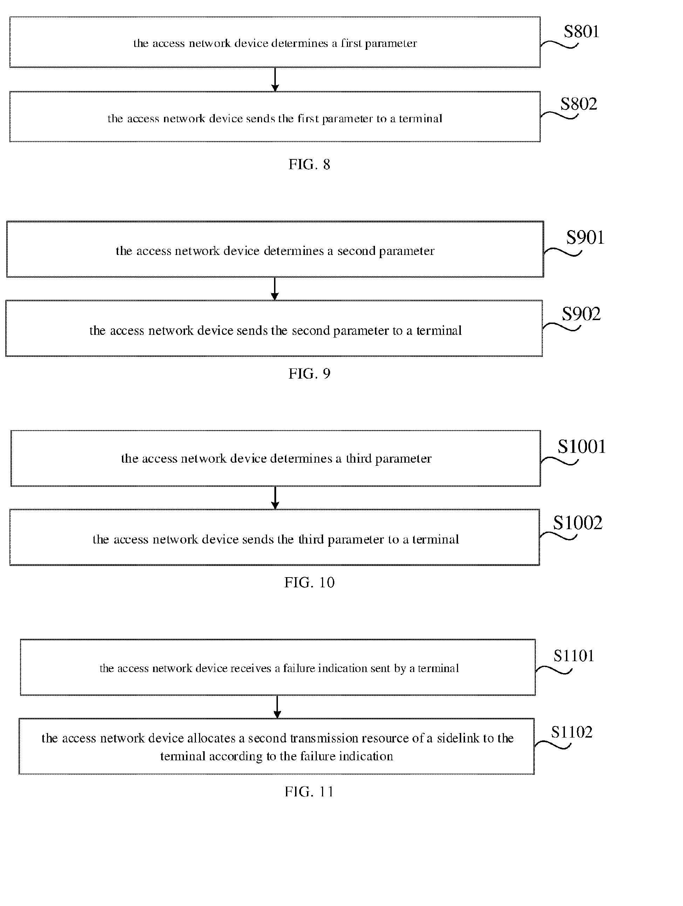

FIG. 8 illustrated a flowchart of a method for determining a persistent LBT failure according to an exemplary embodiment. The method may be applied to an access network device. As illustrated in FIG. 8, the method may include the following steps.

At step S801, the access network device determines a first parameter.

At step S802, the access network device sends the first parameter to a terminal.

The first parameter may be configured to instruct the terminal to determine a statistical number threshold corresponding to a first transmission resource, and further configured to instruct the terminal to determine, according to the statistical number threshold and a number of failures of the terminal performing LBT using the first transmission resource, whether a persistent LBT failure occurs in the first transmission resource.

In some embodiments, the first transmission resource may include a subset of resources used by the terminal for a sidelink transmission on an unlicensed frequency.

In other embodiments, the first transmission resource may also be a resource in a full set of resources used by the terminal for a sidelink transmission on an unlicensed frequency.

In some embodiments, the access network device may send the first parameter to a terminal through one or more of an RRC message, a MAC CE and DCI.

In other embodiments, the access network device may send the first parameter to the terminal through one or more of a system message and an RRC message.

For example, the access network device may send the first parameter to the terminal through a System Information Block 12 (SIB 12) or other SIB messages in the system message.

For another example, the access network device may send the first parameter to the terminal through an RRC reconfiguration message or other RRC messages.

In this way, the access network device may instruct the terminal to determine the statistical number threshold through the first parameter, and instruct the terminal to determine, according to the statistical number threshold and the number of failures of the terminal performing LBT using the first transmission resource, whether the persistent LBT failure occurs in the first transmission resource, so that an accuracy of detecting the persistent LBT failure may be improved.

FIG. 9 illustrated a flowchart of a method for determining a persistent LBT failures according to an exemplary embodiment. As illustrated in FIG. 9, the method may include the following steps.

At step S901, an access network device determines a second parameter.

At step S902, the access network device sends the second parameter to a terminal.

The second parameter may be configured to instruct the terminal to determine a first target duration, so that the terminal sets a value of a failure statistical parameter to a preset initial number in a case where the terminal does not fail to perform LBT using a first transmission resource again within the first target duration after the terminal fails to perform the LBT using the first transmission resource.

In some embodiments, the access network device may send the second parameter to the terminal through one or more of an RRC message, a MAC CE and DCI.

In other embodiments, the access network device may send the second parameter to the terminal through one or more of a system message and an RRC message.

For example, the access network device may send the second parameter to the terminal through the SIB12 or other SIB messages in the system message.

For another example, the access network device may send the second parameter to the terminal through an RRC reconfiguration message or other RRC messages.

In this way, the access network device may instruct the terminal to determine the first target duration through the second parameter, so that within the first target duration after the terminal fails to perform LBT using the first transmission resource, if the terminal does not fail to perform LBT using the first transmission resource again, the terminal sets the value of the failure statistical parameter to the preset initial number, therefore improving an accuracy of detecting the persistent LBT failure.

FIG. 10 illustrated a flowchart of a method for determining a persistent LBT failure according to an exemplary embodiment. As illustrated in FIG. 10, the method may include the following steps.

At step S1001, an access network device determines a third parameter.

At step S1002, the access network device sends the third parameter to a terminal.

The third parameter may be configured to instruct the terminal to determine a second target duration, so that the terminal may select other resources corresponding to a sidelink except a first transmission resource for sidelink communication within the second target duration after determining that a persistent LBT failure occurs in the first transmission resource.

In some embodiments, the access network device may send the third parameter to the terminal through one or more of an RRC message, a MAC CE and DCI.

In other embodiments, the access network device may send the third parameter to the terminal through one or more of a system message and an RRC message.

For example, the access network device may send the third parameter to the terminal through an SIB12 or other SIB messages in the system message.

For another example, the access network device may send the third parameter to the terminal through an RRC reconfiguration message or other RRC messages.

In this way, the access network device may instruct the terminal to determine a second target duration through the third parameter, so that the terminal may select other resources corresponding to the sidelink except the first transmission resource for sidelink communication within the second target duration after determining that the persistent LBT failure occurs in the first transmission resource, so that a persistent transmission failure of the sidelink may be avoided, and a communication reliability of the sidelink may be improved.

FIG. 11 illustrated a flowchart of a method for determining a persistent LBT failure according to an exemplary embodiment. As illustrated in FIG. 11, the method may include the following steps.

At step S1101, an access network device receives a failure indication sent by a terminal.

The failure indication is configured to indicate that the terminal triggers a persistent LBT failure.

At step S1102, the access network device allocates a second transmission resource of a sidelink to the terminal according to the failure indication.

The second transmission resource may be different from the first transmission resource.

In this way, through adjustment of resource allocation, a persistent transmission failure of the sidelink may be avoided, thus improving a communication quality of the sidelink.

In some embodiments, the access network device may receive the failure indication sent by the terminal through one or more of an uplink control signaling and an uplink data message. For example, the access network device may receive the failure indication sent by the terminal through an RRC message.

In some embodiments, the access network device may allocate the second transmission resource different from the first transmission resource to the terminal within a third target duration after receiving the failure indication.

The third target duration may be a duration pre-configured by the access network device.

For example, the access network device may start or restart a third timer corresponding to the first transmission resource according to the third target duration in response to receiving the failure indication. In a case where the third timer does not timing out, the access network device allocates the second transmission resource different from the first transmission resource to the terminal for sidelink communication.

In some embodiments, the access network device may re-try to allocate the first transmission resource to the terminal for the sidelink communication when the third timer times out.

In this way, it may avoid a persistent transmission failure of the sidelink, and prevent the first transmission resource that occurred the persistent LBT failure from being unused for a long time through the third target duration, which not only improves the communication quality of the sidelink, but also improves a resource utilization of the sidelink.

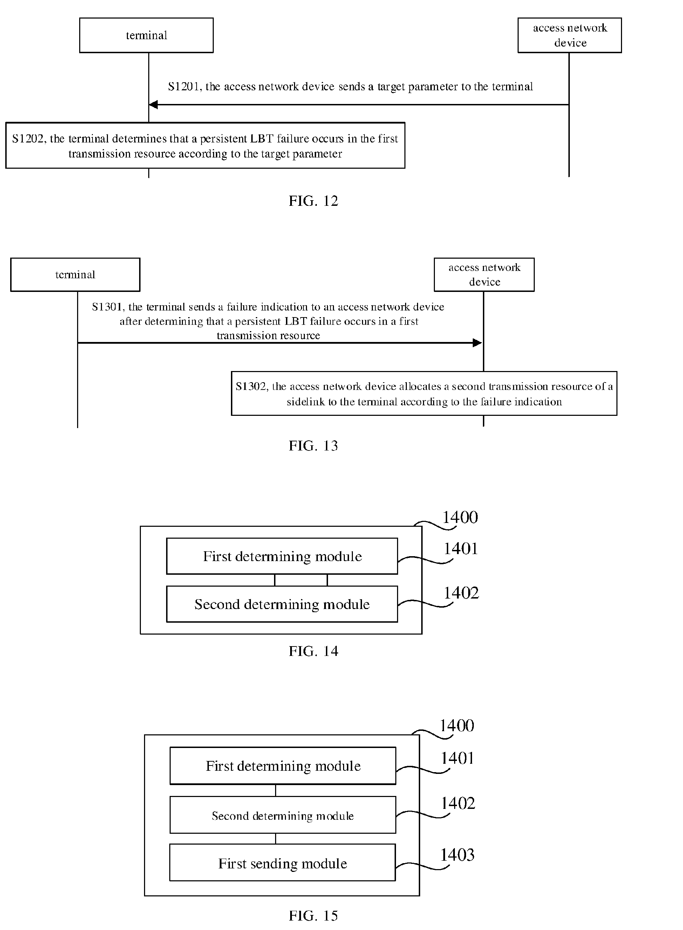

FIG. 12 illustrated a flowchart of a method for determining a persistent LBT failure according to an exemplary embodiment. As illustrated in FIG. 12, the method may include the following steps.

At step S1201, an access network device sends a target parameter to a terminal.

The target parameter includes one or more of a first parameter, a second parameter and a third parameter.

The first parameter may be configured to instruct the terminal to determine a statistical number threshold corresponding to a first transmission resource, and further configured to instruct the terminal to determine, according to the statistical number threshold and a number of failures of the terminal performing LBT using the first transmission resource, whether a persistent LBT failure occurs in the first transmission resource.

The second parameter may be configured to instruct the terminal to determine a first target duration, so that the terminal sets a value of a failure statistical parameter to a preset initial number in a case where the terminal does not fail to perform LBT using a first transmission resource again within the first target duration after the terminal fails to perform the LBT using the first transmission resource.

The third parameter may be configured to instruct the terminal to determine a second target duration, so that the terminal may select other resources corresponding to a sidelink except a first transmission resource for sidelink communication within the second target duration after determining that a persistent LBT failure occurs in the first transmission resource.

At step S1202, the terminal determines that a persistent LBT failure occurs in the first transmission resource according to the target parameter.

It should be noted that the specific way for the terminal to determine that the persistent LBT failure occurs in the first transmission resource be referred to the description in the above embodiments, which is not repeated here.

Through the above method, it may accurately detect and determine whether a persistent LBT failure occurs in the first transmission resource.

FIG. 13 illustrated a flowchart of a method for determining a persistent LBT failure according to an exemplary embodiment. As illustrated in FIG. 13, the method may include the following steps.

At step S1301, the terminal sends a failure indication to an access network device after determining that a persistent LBT failure occurs in a first transmission resource.

The failure indication is configured to indicate that the terminal triggers the persistent LBT failure.

At step S1302, the access network device allocates a second transmission resource of a sidelink to the terminal according to the failure indication.

The second transmission resource may be different from the first transmission resource.

It should be noted that the specific way for the terminal to determine that the persistent LBT failure occurs in the first transmission resource may be referred to the description in the above embodiments, which is not repeated here.

In the above way, through adjusting resource allocation, a persistent transmission failure of the sidelink may be avoided, thus improving a communication quality of the sidelink.

FIG. 14 illustrated a block diagram of an apparatus 1400 for determining a persistent LBT failure according to an exemplary embodiment. The apparatus may be applied in a terminal. As illustrated in FIG. 14, the apparatus may include:
a first determining module 1401, configured to determine a first transmission resource, in which the first transmission resource includes a subset of resources used by the terminal for a sidelink transmission on an unlicensed frequency; and
a second determining module 1402, configured to, in response to determining that a number of failures of the terminal performing LBT using the first transmission resource satisfies a preset condition, determine that a persistent LBT failure occurs in the first transmission resource.

In some embodiments, the preset condition includes:
a condition where the number of failures is greater than or equal to a statistical number threshold corresponding to the first transmission resource, wherein the number of failures is a numerical value obtained, in a case where the terminal fails to perform the LBT using the first transmission resource, by adding a preset step length to a value of a failure statistical parameter corresponding to the first transmission resource.

In some embodiments, there are a plurality of first transmission resources, and different first transmission resources correspond to different failure statistical parameters.

In some embodiments, different first transmission resources correspond to different statistical number thresholds.

In some embodiments, the second determining module 1402 is further configured to: in a case where the terminal does not fail to perform the LBT using the first transmission resource again within a first target duration after the terminal fails to perform the LBT using the first transmission resource, set the value of the failure statistical parameter to a preset initial number.

In some embodiments, the second determining module 1402 is further configured to: start, in a case where the terminal fails to perform the LBT using the first transmission resource, a first timer corresponding to the first transmission resource according to the first target duration, and set the value of the failure statistical parameter to the preset initial number after the first timer times out.

In some embodiments, there are a plurality of first transmission resources, and different first transmission resources correspond to different first timers.

In some embodiments, the second determining module 1402 is further configured to: determine, in response to receiving a first parameter sent by an access network device or another terminal, the statistical number threshold corresponding to the first transmission resource.

In some embodiments, the second determining module 1402 is further configured to: determine, in response to receiving a second parameter sent by an access network device or another terminal, the a first target duration.

FIG. 15 illustrated a block diagram of an apparatus 1400 for determining a persistent LBT failure according to an exemplary embodiment. As illustrated in FIG. 15, the apparatus 1400 may further include:
a first sending module 1403, configured to send a failure indication to an access network device, in which the failure indication is configured to indicate that the terminal triggers the persistent LBT failure.

In some embodiments, the failure indication includes a resource identification corresponding to the first transmission resource.

In some embodiments, the second determining module 1402 is further configured to: in response to determining that the persistent LBT failure occurs in the first transmission resource, select other resources corresponding to the sidelink except the first transmission resource for sidelink communication.

In some embodiments, the second determining module 1402 is further configured to: select other resources corresponding to the sidelink except the first transmission resource for sidelink communication within a second target duration after determining that the persistent LBT failure occurs in the first transmission resource.

In some embodiments, the second determining module 1402 is further configured to: start, in response to determining that the persistent LBT failure occurs in the first transmission resource, a second timer corresponding to the first transmission resource according to the second target duration, and select, in response to the second timer not timing out, other resources corresponding to the sidelink except the first transmission resource for sidelink communication.

In some embodiments, the second determining module 1402 is further configured to: determine, in response to receiving a third parameter sent by an access network device or another terminal, the second target duration.

In some embodiments, the first transmission resource includes one or more of a sidelink transmission resource pool and a sidelink frequency resource.

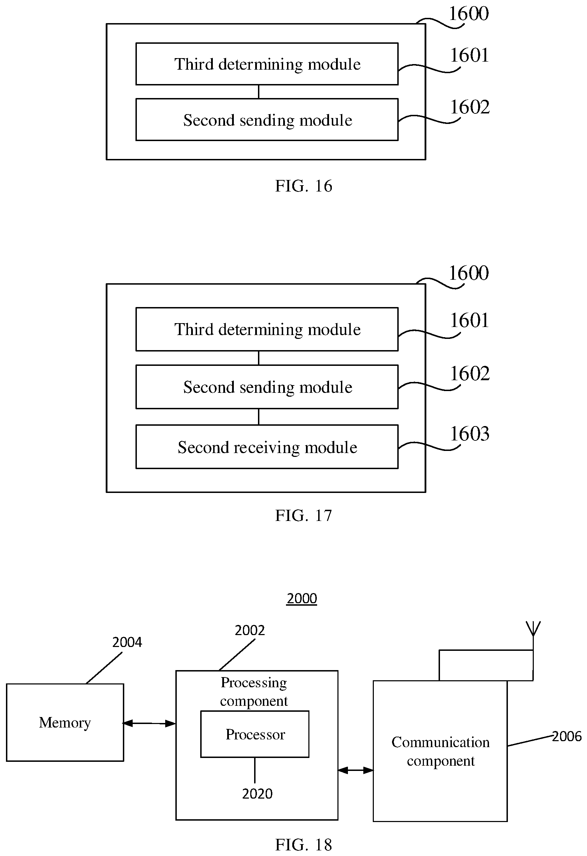

FIG. 16 illustrated a block diagram of an apparatus 1600 for determining a persistent LBT failure according to an exemplary embodiment. The apparatus may be applied in in an access network device. As illustrated in FIG. 16, the apparatus 1600 may include:
a third determining module 1601, configured to determine a first parameter; and
a second sending module 1602, configured to send the first parameter to a terminal, in which the first parameter is configured to instruct the terminal to determine a statistical number threshold corresponding to a first transmission resource, and further configured to instruct the terminal to determine, according to the statistical number threshold and a number of failures of the terminal performing LBT using the first transmission resource, whether a persistent LBT failure occurs in the first transmission resource, in which the first transmission resource includes a subset of resources used by the terminal for a sidelink transmission on an unlicensed frequency.

In some embodiments, the third determining module 1601 is configured to: determine a second parameter.

The second sending module 1602 is configured to: send the second parameter to the terminal, in which the second parameter is configured to instruct the terminal to determine a first target duration, so that the terminal sets a value of a failure statistical parameter to a preset initial number in a case where the terminal does not fail to perform the LBT using the first transmission resource again within the first target duration after the terminal fails to perform the LBT using the first transmission resource.

In some embodiments, the third determining module 1601 is configured to: determine a third parameter.

The second sending module 1602 is configured to: send the third parameter to the terminal, in which the third parameter is configured to instruct the terminal to determine a second target duration, so that the terminal selects other resources corresponding to the sidelink except the first transmission resource for sidelink communication within the second target duration after determining that the persistent LBT failure occurs in the first transmission resource.

FIG. 17 illustrated a block diagram of an apparatus 1600 for determining a persistent LBT failure according to an exemplary embodiment. As illustrated in FIG. 17, the apparatus 1600 may further include:
a second receiving module 1603, configured to receive a failure indication sent by the terminal, in which the failure indication is configured to indicate that the terminal triggers the persistent LBT failure; and
the third determining module 1601, configured to: allocate a second transmission resource of the sidelink to the terminal according to the failure indication, in which the second transmission resource is different from the first transmission resource.

With regard to the apparatus in the above embodiments, the specific way in which each module performs operations has been described in detail in the method embodiment, and will not be described in detail here.

FIG. 18 is a block diagram of an apparatus 2000 for determining persistent LBT failures according to an exemplary embodiment. The apparatus 2000 may be the terminal or the access network device in the communication system shown in FIG. 1.

As illustrated in FIG. 18, the apparatus 2000 may include one or more of the following components: a processing component 2002, a memory 2004, and a communication component 2006.

The processing component 2002 may be configured to control overall operations of the apparatus 2000, such as the operations associated with display, telephone calls, data communications, camera operations, and recording operations. The processing component 2002 may include one or more processors 2020 to perform instructions to implement all or part of the steps in the above described methods for determining the persistent LBT failure. Moreover, the processing component 2002 may include one or more modules which facilitate the interaction between the processing component 2002 and other components. For example, the processing component 2002 may include a multimedia module to facilitate the interaction between the multimedia component and the processing component 2002.

The memory 2004 is configured to store various types of data to support the operation of the apparatus 2000. Examples of such data include instructions for any applications or methods operated on the apparatus 2000, contact data, phonebook data, messages, pictures, video, etc. The memory 2004 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The communication component 2006 is configured to facilitate communication, wired or wirelessly, between the apparatus 2000 and other devices. The apparatus 2000 may access a wireless network based on a communication standard, such as Wi-Fi, 2G, 3G, 4G, 5G, 6G, NB-IOT, eMTC or a combination thereof. In an exemplary embodiment, the communication component 2006 receives a broadcast signal or broadcast associated information from an external broadcast management system via a broadcast channel. In an exemplary embodiment, the communication component 2006 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In some exemplary embodiments, the apparatus 2000 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described methods for determining the persistent LBT failure.

The apparatus 2000 may be an independent electronic device or a part of an independent electronic device. For example, in an embodiment, the electronic device may be an integrated circuit (IC) or a chip, in which the integrated circuit may be one IC or a collection of multiple ICs. The chip may include but is not limited to the following types: a Graphics Processing Unit (GPU), a Central Processing Unit (CPU), a FPGA, a DSP, an ASIC, a System on Chip (SoC), etc. The integrated circuit or chip may be used to execute executable instructions (or codes) to implement the above-mentioned methods for determining the persistent LBT failure. The executable instructions may be stored in the integrated circuit or chip, or may be obtained from other devices or apparatuses. For example, the integrated circuit or chip includes a processor, a memory, and an interface for communicating with other devices. The executable instructions may be stored in the processor, and when the executable instructions are executed by the processor, the above-mentioned methods for determining the persistent LBT failure may be implemented. Alternatively, the integrated circuit or chip may receive the executable instructions through the interface and transmit it to the processor for execution, so as to implement the above-mentioned methods for determining the persistent LBT failure.

In an exemplary embodiment, the disclosure further provides a computer-readable storage medium having computer program instructions stored thereon. When the program instructions are executed by a processor, the steps of the above methods for determining the persistent LBT failure provided by the disclosure are implemented. For example, the computer-readable storage medium may be a non-transitory computer-readable storage medium including instructions, such as the memory 2004. The above instructions may be executed by the processor 2020 of the apparatus 2000 to complete the above methods for determining the persistent LBT failure. For example, the non-transitory computer-readable storage medium may be a ROM, a random access memory (RAM), a CD-ROM, a magnetic tape, a floppy disk, an optical data storage device, and the like.

In another exemplary embodiment, a computer program product is also provided. The computer program product includes a computer program executable by a programmable device, and has a code portion for executing the above methods for determining the persistent LBT failure when the computer program is executed by the programmable device.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as illustrative only, with a true scope and spirit of the disclosure being indicated by the following claims.

It will be appreciated that the disclosure is not limited to the exact construction that has been described above and illustrated in the accompanying drawings, and that various modifications and changes may be made without departing from the scope thereof. It is intended that the scope of the disclosure only be limited by the attached claims.

## Claims

1. A method for determining a persistent listen-before-talk (LBT) failure, applied to a terminal, comprising:
determining a first transmission resource, wherein the first transmission resource comprises a subset of resources used by the terminal for a sidelink transmission on an unlicensed frequency; and
in response to determining that a number of failures of the terminal performing LBT using the first transmission resource satisfies a preset condition, determining that a persistent LBT failure occurs in the first transmission resource.

2. The method of claim 1, wherein the preset condition comprises:
a condition where the number of failures is greater than or equal to a statistical number threshold corresponding to the first transmission resource, wherein the number of failures is a numerical value obtained, in a case where the terminal fails to perform the LBT using the first transmission resource, by adding a preset step length to a value of a failure statistical parameter corresponding to the first transmission resource.

3. The method of claim 2, wherein there are a plurality of first transmission resources, and different first transmission resources correspond to different failure statistical parameters.

4. The method of claim 2, wherein different first transmission resources correspond to different statistical number thresholds.

5. The method of claim 2, further comprising:
in a case where the terminal does not fail to perform the LBT using the first transmission resource again within a first target duration after the terminal fails to perform the LBT using the first transmission resource, setting the value of the failure statistical parameter to a preset initial number.

6. The method of claim 5, wherein in a case where the terminal does not fail to perform the LBT using the first transmission resource again within the first target duration after the terminal fails to perform the LBT using the first transmission resource, setting the value of the failure statistical parameter to the preset initial number, comprises:
starting, in a case where the terminal fails to perform the LBT using the first transmission resource, a first timer corresponding to the first transmission resource according to the first target duration; and
setting the value of the failure statistical parameter to the preset initial number after the first timer times out.

7. The method of claim 6, wherein there are a plurality of first transmission resources, and different first transmission resources correspond to different first timers.

8. The method of claim 2, wherein the statistical number threshold is obtained by:
determining, in response to receiving a first parameter sent by an access network device or another terminal, the statistical number threshold corresponding to the first transmission resource.

9. The method of claim 5, wherein the first target duration is obtained by:
determining, in response to receiving a second parameter sent by an access network device or another terminal, the first target duration.

10. The method of claim 1, wherein in response to determining that the persistent LBT failure occurs in the first transmission resource, the method further comprises:
sending a failure indication to an access network device, wherein the failure indication is configured to indicate that the terminal triggers the persistent LBT failure.

11. The method of claim 10, wherein the failure indication comprises a resource identification corresponding to the first transmission resource.

12. The method of claim 1, further comprising:
in response to determining that the persistent LBT failure occurs in the first transmission resource, selecting other resources corresponding to the sidelink except the first transmission resource for sidelink communication.

13. The method of claim 1, further comprising:
selecting other resources corresponding to the sidelink except the first transmission resource for sidelink communication within a second target duration after determining that the persistent LBT failure occurs in the first transmission resource.

14. The method of claim 13, wherein selecting other resources corresponding to the sidelink except the first transmission resource for sidelink communication within the second target duration after determining that the persistent LBT failure occurs in the first transmission resource, comprises:
starting, in response to determining that the persistent LBT failure occurs in the first transmission resource, a second timer corresponding to the first transmission resource according to the second target duration; and
selecting, in response to the second timer not timing out, other resources corresponding to the sidelink except the first transmission resource for sidelink communication.

15. The method of claim 13, wherein the second target duration is obtained by:
determining, in response to receiving a third parameter sent by an access network device or another terminal, the second target duration.

16. The method of any one of claims 1-15, wherein the first transmission resource comprises one or more of a sidelink transmission resource pool and a sidelink frequency resource.

17. A method for determining a persistent listen-before-talk (LBT) failure, applied to an access network device, comprising:
determining a first parameter; and
sending the first parameter to a terminal, wherein the first parameter is configured to instruct the terminal to determine a statistical number threshold corresponding to a first transmission resource, and further configured to instruct the terminal to determine, according to the statistical number threshold and a number of failures of the terminal performing LBT using the first transmission resource, whether a persistent LBT failure occurs in the first transmission resource, wherein the first transmission resource comprises a subset of resources used by the terminal for a sidelink transmission on an unlicensed frequency.

18. The method of claim 17, further comprising:
determining a second parameter; and
sending the second parameter to the terminal, wherein the second parameter is configured to instruct the terminal to determine a first target duration, so that the terminal sets a value of a failure statistical parameter to a preset initial number in a case where the terminal does not fail to perform the LBT using the first transmission resource again within the first target duration after the terminal fails to perform the LBT using the first transmission resource.

19. The method of claim 17, further comprising:
determining a third parameter; and
sending the third parameter to the terminal, wherein the third parameter is configured to instruct the terminal to determine a second target duration, so that the terminal selects other resources corresponding to the sidelink except the first transmission resource for sidelink communication within the second target duration after determining that the persistent LBT failure occurs in the first transmission resource.

20. The method of claim 17, further comprising:
receiving a failure indication sent by the terminal, wherein the failure indication is configured to indicate that the terminal triggers the persistent LBT failure; and
allocating a second transmission resource of the sidelink to the terminal according to the failure indication, wherein the second transmission resource is different from the first transmission resource.

21. The method of any one of claims 17-20, wherein the first transmission resource comprises one or more of a sidelink transmission resource pool and a sidelink frequency resource.

22. An apparatus for determining a persistent listen-before-talk (LBT) failure, applied to a terminal, comprising:
a first determining module, configured to determine a first transmission resource, wherein the first transmission resource comprises a subset of resources used by the terminal for a sidelink transmission on an unlicensed frequency; and
a second determining module, configured to, in response to determining that a number of failures of the terminal performing LBT using the first transmission resource satisfies a preset condition, determine that a persistent LBT failure occurs in the first transmission resource.

23. An apparatus for determining persistent listen-before-talk (LBT) failures, applied to an access network device, comprising:
a third determining module, configured to determine a first parameter; and
a second sending module, configured to send the first parameter to a terminal, wherein the first parameter is configured to instruct the terminal to determine a statistical number threshold corresponding to a first transmission resource, and further configured to instruct the terminal to determine, according to the statistical number threshold and a number of failures of the terminal performing LBT using the first transmission resource, whether a persistent LBT failure occurs in the first transmission resource, wherein the first transmission resource comprises a subset of resources used by the terminal for a sidelink transmission on an unlicensed frequency.

24. A device for determining a persistent listen-before-talk (LBT) failure, comprising:
a processor; and
a memory for storing instructions executable by the processor;
wherein the processor is configured to perform the steps of the method of any one of claims 1-16, or the processor is configured to perform the steps of the method of any one of claims 17 - 21.

25. A computer-readable storage medium having computer program instructions stored thereon, wherein when the computer program instructions are executed by a processor, the steps of the method according to any one of claims 1-16, or the steps of the method according to any one of claims 17-21 are implemented.

26. A chip comprising a processor and an interface, wherein the processor is configured to read instructions to execute the steps of the method according to any one of claims 1-16, or the steps of the method according to any one of claims 17-21.
